# EUROPÄISCHE PATENTSCHRIFT

(11) **EP 3 387 224 B1**
(45) Veröffentlichungstag und Bekanntmachung des Hinweises auf die Patenterteilung: **08.01.2020**
(21) Anmeldenummer: 16802086.5
(22) Anmeldetag: 30.11.2016
(51) Int. Cl.: B21D 39/06, F01L 1/047, F16H 53/02

(54) **VERFAHREN ZUR DAUERHAFTEN BEFESTIGUNG VON NOCKEN AUF EINEM TRÄGERROHR**
METHOD FOR PERMANENTLY FASTENING CAMS ON A CARRIER TUBE
PROCÉDÉ DE FIXATION PERMANENTE DE CAMES SUR UN TUBE DE SUPPORT

(30) Priorität: 10.12.2015 DE 102015224905
(43) Veröffentlichungstag der Anmeldung: 17.10.2018
(73) Patentinhaber: ThyssenKrupp Presta TecCenter AG, 9492 Eschen (LI); thyssenkrupp AG, 45143 Essen (DE)
(72) Erfinder: MUSTER, Manfred, 6713 Ludesch (AT); ROGATSCH, Thomas, 6800 Feldkirch (AT); LUGAUER, Gunther Martin, 6800 Feldkirch (AT)
(74) Vertreter: thyssenkrupp Intellectual Property GmbH
(86) Internationale Anmeldenummer: PCT/EP2016/079177
(87) Internationale Veröffentlichungsnummer: WO 2017/097636

(56) Entgegenhaltungen:
- DE-A1-102009 052 222
- DE-U1- 9 320 451
- FR-A1- 3 018 104
- JP-A- H05 248 418
- JP-A- H06 299 808
- JP-A- 2010 051 975
- US-A- 4 597 365
- US-A- 4 809 562

## Beschreibung

Die vorliegende Erfindung betrifft ein Verfahren sowie eine Montagevorrichtung zur dauerhaften Befestigung von wenigstens einem Nocken auf einem Nockenträger.

Es ist bekannt, Nockenwellen insbesondere für die Steuerung der Gaswechselventile bei Verbrennungsmotoren mehrteilig aufzubauen. Dabei wird eine Grundnockenwelle als Rohr gefertigt und die verschiedenen Nocken und andere Bauelemente wie z. B. Geber für Drehwinkelsensoren separat gefertigt. Die Elemente werden dann auf das Rohr aufgesetzt und dort durch Verpressen oder Verstemmen in Radialrichtung befestigt. Ein Beispiel für diese Bauart einer gebauten Nockenwelle mit einer rohrförmigen Grundnockenwelle und einzeln aufgesetzten Nocken, die durch Verstemmen in Radialrichtung befestigt werden, ist aus der EP 0 340 128 B1 bekannt. Die Radialrichtung und die Axialrichtung sind jeweils bezogen auf die vorgesehene Dreachse der Nockenwelle im Betrieb.

Insbesondere ist auch bekannt, einen Ventiltrieb mit einer mit Außenverzahnung versehenen Grundnockenwelle herzustellen, auf dem mit einer komplementären, in Axialrichtung verlaufenen Innenverzahnung versehenen Nockenträger verschieblich angeordnet sind. Die Nockenträger werden dann wie oben beschrieben aus einem rohrförmigen Grundkörper mit aufgesetzten separaten Hubnocken gefertigt. Das Fügen des Nockenträgers mit den einzelnen Nocken muss hierbei so erfolgen, dass die einzelnen Nocken in Umfangsrichtung drehfest auf dem Nockenträger angeordnet sind und axial unverschieblich sind, auch bei hoher Temperaturbelastung. Ein rein kraftschlüssiger Sitz ist hierbei in manchen Betriebszuständen problematisch. Diese Bauart eines Ventiltriebs mit einer außen verzahnten Grundnockenwelle und einem darauf axial verschieblichen Nockenträger ist bekannt aus der DE 10 2008 028 513 A1.

Das Verfahren aus der EP 0 340 128 B1 zur Befestigung der Nocken auf der Grundnockenwelle ist für die axial verschiebbaren Nockenträger nicht geeignet, da das Verstemmen in Radialrichtung die Innenverzahnung des Nockenträgers verformen kann und dadurch die leichte Verschiebbarkeit des Nockenträgers auf der außen verzahnten Grundnockenwelle beeinträchtigen kann. Außerdem ist es bei diesem Verfahren notwendig, dass das Rohr der Grundnockenwelle axial aus dem darauf zu befestigenden Nocken hervorsteht.

Aus der DE 10 2009 052 222 ist ein gattungsgemäßes Verfahren zur dauerhaften Befestigung von wenigstens einem Nocken auf einem Nockenträger bekannt geworden. Hier wird ein Verfahren vorgeschlagen, bei dem die Innenverzahnung an wenigstens einer Position des Nockenwellenschaftes, die zum Anordnen eines Nockens vorgesehen ist, bezüglich einer zur Verzahnung der Welle komplementären Form deformiert hergestellt wird. Hieraus soll sich der Vorteil ergeben, dass sich nach dem Lösen der Einspannung des Nockenwellenschaftes nach der Herstellung des Innenverzahnung diese durch die elastische Rückverformung des Nockenwellenschaftes in die Form ohne Einspannung leicht deformiert ist, wobei sich eine an den Positionen der danach aufgebrachten Nocken durch die Deformation des Nockenwellenschaftes aufgrund der aufgebrachten Nocken bzw. beim Fügen des Nockenwellenstückes eine wieder undeformierte Innenverzahnung des Nockenwellenschaftes ergibt. Wenngleich sich hier möglicherweise ein vorteilhaftes Herstellungsverfahren ergibt, so besteht bedar an einer alternativen Vorgehensweise, insbesondere da die deformierte Herstellung in einer Serienproduktion eine große Herausforderung darstellt.Es ist deshalb Aufgabe der vorliegenden Erfindung, ein Verfahren zur Befestigung von Nocken auf einem rohrförmigen Nockenträger zu schaffen, das die erforderliche Befestigung in Umfangsrichtung und in Axialrichtung sicher gewährleistet.

Diese Aufgabe wird gelöst mittels eines Verfahrens zur dauerhaften Befestigung von wenigstens einem Nocken auf einem Nockenträgermit den Merkmalen gemäß Anspruch 1 sowie mittels einer Montagevorrichtung zur dauerhaften Befestigung von wenigstens einem Nocken auf einem Nockenträger mit den Merkmalen gemäß Anspruch 5.

Weitere Merkmale und Details der Erfindung ergeben sich aus den Unteransprüchen, der Beschreibung und den Zeichnungen. Dabei gelten Merkmale und Details, die im Zusammenhang mit der dem erfindungsgemäßen Verfahren beschrieben sind, selbstverständlich auch im Zusammenhang mit der erfindungsgemäßen Montagevorrichtung und jeweils umgekehrt, so dass bezüglich der Offenbarung zu den einzelnen Erfindungsaspekten stets wechselseitig Bezug genommen wird beziehungsweise werden kann. Außerdem kann das erfindungsgemäße Verfahren mit der erfindungsgemäßen Montagevorrichtung durchgeführt werden.

Das erfindungsgemäße Verfahren zur dauerhaften Befestigung von wenigstens einem Nocken auf einem Nockenträger weist zumindest die folgenden Verfahrensschritte auf:
a) Positionieren des wenigstens einen Nockens derartauf dem Nockenträger in einer vorgegebenen Axial- und Winkelposition, dass sich der Nockenträger zumindest abschnittsweise durch eine Durchgangsbohrung des Nockens erstreckt, wobei eine Stirnseite des Nockenträgers mit einer Stirnseite des Nockens fluchtet,
b) Anordnen des aus dem Nockenträger und dem wenigstens einen Nockens gebildeten Nockensegmentes in einer Montagevorrichtung, und
c) Verformen des Nockenträgers derart, dass der wenigstens eine Nocken gegen Bewegen in Axialrichtung auf dem Nockenträger zumindest kraftschlüssig oder formschlüssig gesichert ist, wobei ein Verformungswerkzeug der Montagevorrichtung in Axialrichtung auf die Stirnseite des Nockenträgers zugestellt wird, und der Nockenträger derart verformt wird, dass Material des Nockenträgers in Radialrichtung nach außen gegen den aufgesetzten Nocken gedrängt wird.

Weil bei dem erfindungsgemäßen Verfahren mit einem Verformungswerkzeug, welches in Axialrichtung auf die Stirnseite des Nockenträgers zugestellt wird, der Nockenträger derart verformt wird, dass Material des Nockenträgers in Radialrichtung nach außen gegen den aufgesetzten Nocken gedrängt wird, wird der Nocken insbesondere in Axialrichtung gegen ein Abziehen von dem Nockenträger gesichert. Vorteilhaft wird die Montagevorrichtung zum Anordnen des Nockens an dem Nockenträger verwendet. Es ist zudem denkbar, dass mehrere Nocken auf einem Nockenträger angeordnet werden. Vorteilhaft weist jeder Nocken wenigstens eine Nockenbahn auf. Es ist jedoch auch möglich, dass jeder Nocken zwei oder mehr axial zueinander angeordnete Nockenbahnen aufweist, um das Öffnen und Schließen der Ventile eines Verbrennungsmotors sowie auch den Zeitpunkt und den Hub verändern bzw. variieren zu können.

Mittels des erfindungsgemäßen Verfahrens wird durch eine Deformierung der Wandung des Nockenträgers zumindest eine kraftschlüssige Verbindung zwischen dem Nocken, insbesondere der Oberfläche im Bereich der Durchgangsbohrung des Nockens und der Wandung des Nockenträgers ermöglicht. Basierend auf einer erzeugten Haftreibungskraft ist aufgrund der Auswölbung der Wandung des Nockenträgers radial nach außen in Richtung des auf dem Nockenträger angeordneten Nockens zumindest eine Bewegung des Nockens in axialer Richtung entlang des Nockenträgers, vorteilhaft auch eine Drehbewegung in Umfangsrichtung um den Nockenträger verhindert.

Im Rahmen der Erfindung ist es des Weiteren denkbar, dass das Material des Nockenträgers im Schritt c) derart radial nach außen gedrängt wird, dass dieses Material in eine Vertiefung des Nockens gedrängt wird, welche an der Durchgangsbohrung des Nockens, die zum Aufsetzen des Nockens auf den Nockenträger vorgesehen ist, gebildet ist. Vorteilhaft wird der Nocken dadurch gegen Abziehkräfte in Axialrichtung nicht nur kraftschlüssig, sondern zumindest abschnittsweise auch formschlüssig gesichert. Die Vertiefung erstreckt sich dabei zumindest abschnittsweise innerhalb der Durchgangsbohrung des Nockenelementes. Vorteilhaft ist die Vertiefung in Form einer Nut ausgestaltet,welche eine unterschiedliche geometrische Form ausfweisen kann.

Es ist des Weiteren denkbar, dass das Material des Nockenträgers im Schritt c) in eine in der Durchgangsbohrung umlaufend gebildeten Vertiefung gedrängt wird. Vorteilhaft erstreckt sich demnach die Vertiefung beispielsweise in Form einer Nut umlaufend in Umfangrichtugn betrachtet innerhalb der Durchgangsbohrung, sodass eine in Umfangrichtung betrachtet vollumfängliche formschlüssige Verbindung zwischen dem Nocken und dem Nockenträger erzeugbar ist. Es ist zudem denkbar, dass die Vertiefung in Gestalt einer Fase ausgebildet ist, welche als abgeschrägte Fläche an der Kante des Nockens im Bereich der Durchgangsbohrung ausgebildet ist und zudem ein einfaches Aufschieben des Nockens auf dem Nockenträger ermöglicht.

Im Rahmen der Erfindung ist es des Weiteren denkbar, dass das Nockensegment im Schitt b) auf einen zentralen Zapfen des Verformungswerkzeuges aufgesetzt wird. Dieser zentrale Zapfen erstreckt sich vorteilhaft ausgehend von einer Stirnfläche des Verformungswerkzeuges im Wesentlichen in axialer Richtung von dieser weg. Vorteilhaft weist der Zapfen eine Fase, insbesondere eine Einführschräge auf, um ein einfaches Aufsetzen des Nockensegmentes, bestehend aus dem Nockenträger und des wenigstens einen auf dem Nockenträger angeordneten Nockens zu ermöglichen. Der Zapfen dient vorteilhaft als Zentrierelement, um die positionsgenaue Anordnung des Nockensegmentes auf dem Verformungswerkzeug zu ermöglichen. Dazu ist es von vorteil, wenn der Nockenträger mit dem zu befestigenden Nocken in Axialrichtung bündig abschließend ausgebildet ist. Bei dieser Ausführungsform wird durch das Verstemmen in Axialrichtung kein Überstand erzeugt, so dass der Nockenträger mit den darauf montierten Nocken eine optimal kurze Baugruppe bildet. Dieser Vorteil ist beispielsweise bei dem radialen Verstemmen zur Befestigung von Nocken auf einer Grundnockenwelle nach dem Eingangs genannten Stand der Technik nicht erzielbar.

Es ist ferner eine Vorrichtung zur Montage eines Elements auf einem Profilrohr aus der JP 2010-051975 A bekannt geworden. Das Element weist eine Durchgangsöffnung auf, die zu einer Außenkontur des Profilrohres komplementär ausgebildet ist. Zur Montage wird das Element auf das Profilrohr geschoben. Durch die Montagevorrichtung wird das Profilrohr nach außen aufgeweitet und gegen das Element gedrängt, wodurch das Element fest mit dem Profilrohr verbunden wird. Die Vorrichtung weist ein Werkzeug und ein Verformungselement auf. Das Werkzeug erstreckt sich dabei in axialer Richtung von einer Stirnseite des Verformungselements weg.

Wenngleich mit dieser Vorrichtung akzeptable Montageergebnisse erzielt werden können, so besteht Bedarf nach einer präziseren Verformung des Nockenträgers.

Es ist des Weiteren eine Montagevorrichtung zur dauerhaften Befestigung von wenigstens einem Nocken auf einem Nockenträger zur Erzeugung eines Nockensegmentes beansprucht. Die erfindungsgemäße Montagevorrichung weist wenigstens ein Verformungswerkzeug zur Verformen des Nockenträgers derart auf, dass der wenigstens eine Nocken gegen Bewegen in Axialrichtung auf dem Nockenträger zumindest kraftschlüssig oder formschlüssig gesichert ist. Vorteilhaft weist die Montagevorrichtung auch ein Halteelement, insbesondere ein Greifelement zur Positionierung des Nockensegmentes relativ zum Verformungswerkzeug auf. Vorteilhaft ist das Halteelement beweglich relativ zu dem Verformungswerkzeug angeordnet. Sodass das Verformungswerkzeug in Richtung des Halteelementes oder das Halteelement in Richtung des Verformungswerkzeuges bewegbar ist.

Erfindungsgemäß ist hier vorgesehen, dass das wenigstens eine Verformungselement in einer achsparallelen Bohrung des Verformungswerkzeugs angeordnet ist. Dies Bohrung ist beispielsweise linear ausgebildet und achsparallel zu der Symmetrieachse der Montagevorrichtung bzw. des Verformungswerkzeuges ausgerichtet. Somit ist das Verformungselement positionsgenau auf eine kreisringförmige Stirnfläche eines Nockenträgers zustellbar, wodurch eine präzise Verformung des Nockenträgers ermöglicht wird.

Es ist demnach des Weiteren möglich, dass das Verformungswerkzeug in Axialrichtung auf die Stirnseite des Nockenträgers zugestellbar ist, um den Nockenträger derart zu verformen, dass Material des Nockenträgers in Radialrichtung nach außen gegen den aufgesetzten Nocken gedrängt wird. Das Halteelement dient dabei vorteilhaft als Gegenstück zum Verformungswerkzeug und bringt demnach eine Gegenkraft auf, welche eine Verformung bzw. Deformierung des Nockenträgers ermöglicht.

Vorteilhaft weist das Verformungswerkzeug wenigstens ein Verformungselement auf, welches sich ausgehend von einer Stirnfläche des Verformungswerkzeuges in axialer Richtung von dieser Stirnfläche weg erstreckt. Mittels des Verformungselementes wird eine Verdrängung des Materials des Nockenträgers radial nach außen in Richtung des auf dem Nockenträger angeordneten Nockens ermöglicht. So ist es denkbar, dass das Verformungselement in Umfangsrichung betrachtet durchgängig auf der Stirnfläche oder an einer Umfangswandung des Verformungswerkzeuges ausgebildet ist. Dadurch wird vorteilhaft auch eine vollumfängliche Deformierung des Materials des Nockenträgers in dem Abschnitt des Nockenträgers ermöglicht, in welchen das Verformungselememt eingreift. Vorteilhaft findet hierzu eine in Umfangrichtung betrachtet vollumfängliche Verformung im Bereich der Stirnfläche des Nockenträgers statt, welche vorteilhaft mit der Stirnfläche des angeordneten Nockens fluchtet.

Es ist auch möglich, dass das Verformungselement in Gestalt eines einzelnen Vorspunges, insbesondere pinartigen bzw. stiftartigen Vorsprunges ausgebildet ist. Dadurch findet eine Deformierung bzw. Verformung der Wandung des Nockenträgers lediglich punktuell statt.

Es ist des Weiteren denkbar, dass das Verformungswerkzeug eine Merhzahl an Verformungselementen aufweist, welche mit gleichförmigem Winkelabstand in Umfangsrichtung an dem Verformungswerkzeug angeordnet sind. Hierdurch findet an zueinander gleich beabstandeten Punkten eine Deformierung bzw. Verformung der Wandung des Nockenträgers und folglich eine Erzeugung zumindest eines punktuellen Kraftschlusses oder Formschlusses oder Kraft-/Formschlusses statt. Vorteilhaft wird folglich die Gefahr eines nicht prozessicheren Haltens des Nockens an dem Nockenträger aufgrund einer Mehrzahl an verwendeten Kraftschluss- bzw. Formschlussbereichen vermieden.

Im Rahmen der Erfindung ist es denkbar, dass das Verformungselement als Messer mit einer Spitze ausgebildet ist. Vorteilhaft ist diese Spitze keilförmig oder kegelförmig ausgebildet ist. Es ist zudem möglich, dass das Verformungswerkzeug wenigstens drei über den Umfang verteilte Messer mit jeweils einer vorzugsweise keilförmigen oder kegelförmigen Spitze aufweist, die dazu geeignet sind, den Nockenträger an seiner Stirnseite zu verformen. Der Begriff "Messer" wird im Rahmen der Erfindung für Werkzeugelemente verwendet, die mit einer in der Stirnfläche kleinen abgerundeten oder scharfen Vorderseite geeignet sind, das Material des Nockenträgers zu verformen. Dabei ist für eine gleichmäßige Befestigung der Nocken auf dem Nockenträger vorteilhaft, wenn die Messer mit gleichförmigem Winkelabstand in Umfangsrichtung des Werkzeugs angeordnet sind.

Das Verformungswerkzeug weist vorteilhaft auswechselbare Verformungselementen, wie beispielsweise Messer auf.

Eine Verformung des Nockens in dabei nicht erforderlich und auch nicht gewünscht, da es sich bei den Nocken um gehärtete Bauteile handelt, die durch eine Verformung bei dem oben beschriebenen Fügevorgang beschädigt werden könnten.

Bei der erfindungsgemäßen Montagevorrichtung ergeben sich sämliche Vorteile, die bereits zu dem erfindungsgemäßen Verfahren gemäß dem ersten Aspekt der Erfindung aufgeführt worden sind.

Nachfolgend wird ein Ausführungsbeispiel der vorliegenden Erfindung anhand der Zeichnungen näher beschrieben. Es zeigen:
- Figur 1:: in einer seitlichen Schnittdarstellung eine Ausführungsform einer erfindungsgemäßen Montagevorrichtung mit einer angeordneten Ausführungsform eines Nockensegments vor dem axialen Verstemmen;
- Figur 2:: in einer Draufsicht von oben die in der Figur 1 aufgezeigte Ausführungsform einer erfindungsgemäßen Montagevorrichtung mit einer angeordneten Ausführungsform eines Nockensegments, und
- Figur 3:: in eier perspektivischen Ansicht die in den Figuren 1 und 2 gezeigte Ausführungsform einer Montagevorrichtung mit einer angeordneten Ausführungsform eines Nockensegments.

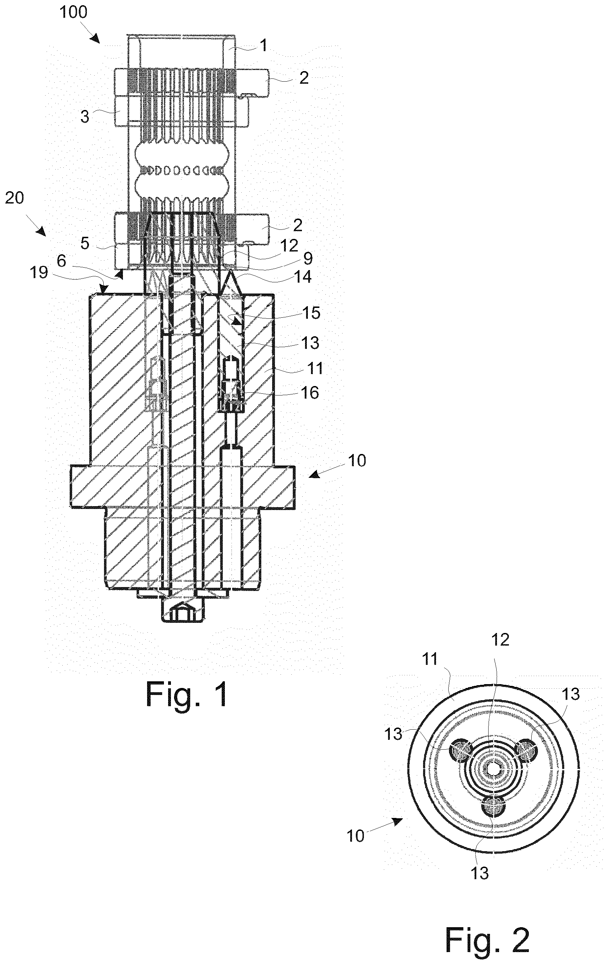

Merkmale und Details mit gleicher Funktion und Wirkungsweise sind dabei in den Figuren 1 bis 3 mit den gleichen Bezugszeichen versehen.

In der Figur 1 ist als Beispiel für die Realisierung des erfindungsgemäßen Verfahrens eine Ausführungsform einer erfindungsgemäßen Montagevorrichtung 20 gezeigt. Auf der Montagevorrichtung 20, insbesondere auf dem Verformungswerkzeug 10 der Montagevorrichtung 20 ist ein Nockensegment 100 aufgesetzt, wie dies in der Figur 1 in einem Längsschnitt entlang der Symmetrieachse dargestellt ist. Das Nockensegment 100 umfasst einen innen verzahnten Nockenträger 1 und darauf aufgesetzte Nocken 2, 3, 4. Dabei bilden zwei der Nocken 2, 3, 4 sogenannte Null-Hub-Nocken, welche mit den Bezugszeichen 3 und 4 gekenzeichnet sind. Einer der Null-Hub Nocken, welcher mit dem Bezugszeichen 4 gekennzeichnet ist, ist derart auf dem Nockenträger 1 angeordnet und beispielsweise mit einem Presssitz vormontiert, dass seine axiale Stirnseite 5 im Wesentlichen bündig mit einer axialen Stirnseite 6 des Nockenträgers 1 ausgerichtet ist. Aufgabe des erfindungsgemäßen Verfahrens ist es, den Nocken 4 auf dem Nockenträger 1 zumindest in Axialrichtung sicher zu befestigen.

Zu diesem Zweck ist das Verformungswerkzeug 10 koaxial mit dem oben beschriebenen Werkstück, das bedeutet dem Nockensegment 100 angeordnet. Das Verformungswerkzeug 10 weist gemäß der in der Figur 1 gezeigten Ausführungsform einen etwa rotationssymmetrischen Grundkörper 11 auf. Ausgehend von einer dem Nockensegment 100 zuwendbaren Stirnfläche 19 des Verformnungswerkzeuges 10, insbesondere dessen Grundkörperll,erstreckt sich koaxial ein Zapfen 12von dem Grundkörper 11 weg. Der Zapfen 12 dient vorteilhaft zur Halterung und Zentrierung des Nockensegmentes 100 an dem Verformungswerkzeug 10. Weiter ist in dem Grundkörper 11 eine Anzahl von Verformungselementen 13 angeordnet, welche beispielsweise in Gestalt eines Messers ausgebildet sind. Gemäß der in der Figur 1 gezeigten Ausführungsform sind insgesamt drei Verformungselemente 13 angeordnet. Die Verformungselemente 13 weisen in diesem Ausführungsbeispiel eine keilförmige Spitze 14 auf, wobei die Stirnkante der keilförmigen Spitze 14 in Tangentialrichtung zu dem Werkstück verläuft. Die Verformungselemente 13 sind jeweils in entsprechenden Bohrungen 15 des Verformungswerkzeuges 10 eingesetzt und dort in Axialrichtung abgestützt. Die Befestigung der Verformungselemente 13 in dem Grundkörper 11 kann auf verschiedene Weisen bewirkt werden, beispielsweise mittels Schrauben 16.

In der Figur 2 ist das Verformungswerkzeug 10 in einer Ansicht auf die dem Nockensegment 100 zugewandte Stirnseite, die sich in der Figur 1 oben befindet, dargestellt. Der im Wesentlichen rotationssymmetrische Aufbau des Verformungswerkzeuges 10 ist ersichtlich. Insbesondere ist bei dieser Ausführungsform eine Anzahl von insgesamt drei Verformungselementen13 vorgesehen, die in gleichwinkligem Abstand von vorteilhaft 120° in Umfangsrichtung verteilt sind.

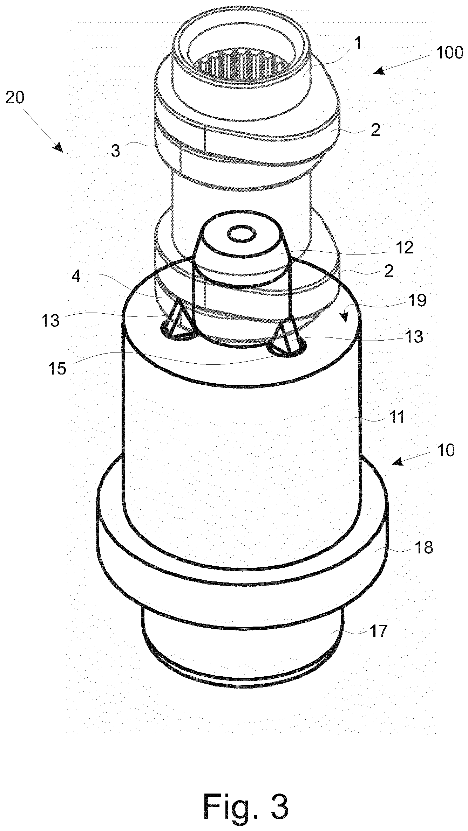

Die Figur 3 zeigt in einer perspektivischen Ansicht die Anordnung aus den Figuren 1 und 2, wobei das Nockensegment 100 transparent dargestellt ist.

Vorteilhaft weist die Montagevorrichtung 20 zusätzlich zu dem Verformungswerkzeug 10 auch ein hier nicht gezeigtes Halteelement auf, welches zum Halten und Positionieren des Nockensegmentes 100 relativ zu dem Verformungswerkzeug 10 dient. Dieses Halteelement ist relativ zu dem Verformungswerkzeug 10 bewegbar ausgebildet, sodass eine Anordnung des Nockensegmentes 100 auf dem Verformungswerkzeug 10 ermöglicht werden kann. Zudem ermöglicht das Halteelement vorteilhaft ein Abstützen des Nockenelementes 100 in Axialrichtung, sodass mit dem Verformungswerkzeug 10 eine entsprechende Axialkraft auf das Nockensegment 100 aufbringbar ist.

Es ist des Weiteren denkbar, dass die Montagevorrichtung 20 auch eine hier nichtgezeigte Antriebsvorrichtung zur axialen Bewegung des Verformungswerkzeuges 10 aufweist. Das Verformungswerkzeug 10 weist hierzu einen Anschlussbereich 17 für den Anschluss an die Antriebseinrichtung der Montagevorrichtung 20 sowie einen umlaufenden Kragen 18 zur Abstützung von Antriebskräften auf.

Bei dem erfindungsgemäßen Verfahren wird wie folgt vorgegangen:
Zunächst wird der Nockenträger 1 mit den Nocken 2 sowie den Null-Hub-Nocken 3 und 4 bestückt und ein nockensegm,ent 100 gebildet. Die Nocken 2, 3, 4 können dabei bereits mit Presssitz auf den Nockenträger 1 aufgesetzt werden. Der Nocken 4 wird dabei derart ausgerichtet, dass seine dem Verformungswerkzeug 10 zugewandte Stirnseite 5 plan in einer Ebene mit der entsprechenden Stirnseite 6 des Nockenträgers 1 ausgerichtet ist.

Sodann wird das Nockensegment 100 auf dem Zapfen 12 des Verformungswerkzeuges 10 zentriert aufgesetzt. Die Verformungselemente 13 liegen dabei mit ihren Stirnkanten an der Stirnseite 6 des Nockenträgers 1 an. Eine Anlage an den Nocken 4 ist nicht vorgesehen.

Vorzugsweise liegen die Stirnkanten der Verformungselemente 13 etwa mittig auf der ringförmigen Stirnseite 6 des Nockenträgers 1 auf. Der Nockenträger 1 wird dann in Axialrichtung abgestützt und eine Kraft auf das Verformungswerkzeug 10 in Axialrichtung auf den Nockenträger 1 zu aufgebracht. Die Verformungselemente 13 dringen mit ihren Kanten in das Material des Nockenträgers 1 ein und verformen dieses in Radialrichtung nach außen, so dass das Material beispielsweise in eine in der Durchgangsbohrung des Nockens 4 ausgebildeten Vertiefung 9, wie vorteilhaft einer stirnseitig an dem Nocken 4 angebrachte Fase eindringen kann. Der Nockenträger 1 wird dadurch zumindest punktuell geringfügig aufgeweitet und sichert Nocken 4, insbesondere denin den Figuren 1 und 3 gezeigten Null-Hub-Nocken 4 gegen ungewolltes Abziehen in Axialrichtung, und zwar auch bei im Betrieb eventuell auftretenden extremen Temperaturen, die auf Grund der unterschiedlichen Materialien des Nockenträgers 1 und der Nocken 2, 3 und 4 zu einer Lockerung des Presssitzes führen könnten.

Vorteilhaft wird das Eindringen des Materials des Nockenträgers 1 in den inneren freien Querschnitt wird zum Einen dadurch verhindert, dass der Nockenträger 1 beispielsweise stirnseitig auf der Innenseite eine relativ große Fase aufweist, sodass auch eine Verformung im Bereich der Stirnseite 6 nicht dazu führt, dass Material in den inneren freien Querschnitt des Nockenträgers 1 eindringt, denn dies würde die Verschieblichkeit des Nockenträgers 1 auf der außen verzahnten Grundnockenwelle möglicherweise behindern.

Bei dem beschriebenen Verfahrensschritt des Verstemmens in Axialrichtung wird das gesamte Verfomrungswerkzeug 10 mit den darin abgestützten Verformungselementen 13 gegen das Nockensegment 100 gedrückt. Es kann auch vorgesehen sein, dass die Verformungselemente 13 beweglich in den Bohrungen 15 des Verfomrungswerkzeuges 10 angeordnet sind und von jeweils einer eigenen Antriebsvorrichtung gegen das Nockensegment 100 gepresst werden. Diese Antriebsvorrichtung kann hydraulisch oder mechanisch sein.

Die Ausgestaltung der Verfomrungselemente 13 kann abweichend von der dargestellten keilförmigen Gestalt auch beispielsweise mit einer in Umfangsrichtung verlaufenden gekrümmten Schneidkante ausgeführt sein. Die Verfomrungselemente 13 können schließlich auch kegelförmig oder pyramidenförmig mit einer ausgeprägten Spitze sein, wodurch die Verformungskräfte reduziert werden können, ohne dass nach dem Fügen der sichere Halt des Null-Hub-Nockens 4 auf dem Nockenträger 1 gefährdet wäre.

## Patentansprüche

1. Verfahren zur dauerhaften Befestigung von wenigstens einem Nocken (2, 3, 4) auf einem rohrförmigen Nockenträger (1), mit zumindest den folgenden Verfahrensschritten:
a) Positionieren des wenigstens einen Nockens (2, 3, 4) derartauf dem Nockenträger (1) in einer vorgegebenen Axial- und Winkelposition, dass sich der Nockenträger (1) zumindest abschnittsweise durch eine Durchgangsbohrung des Nockens (2, 3, 4) erstreckt, wobei eine Stirnseite (6) des Nockenträgers (1) mit einer Stirnseite (5) des Nockens (4) fluchtet,
b) Anordnen des aus dem Nockenträger (1) und dem wenigstens einen Nockens (2, 3, 4) gebildeten Nockensegmentes (100) in einer Montagevorrichtung;
c) Verformen des Nockenträgers (1) derart, dass der wenigstens eine Nocken (2, 3, 4) gegen Bewegen in Axialrichtung auf dem Nockenträger (1) zumindest formschlüssig oder kraftschlüssig gesichert ist, wobei ein Verformungswerkzeug (10) der Montagevorrichtung in Axialrichtung auf die Stirnseite (6) des Nockenträgers (1) zugestellt wird, und der Nockenträger (1) derart verformt wird, **dadurch gekennzeichnet, dass** Material des Nockenträgers (1) in Radialrichtung nach außen gegen den aufgesetzten Nocken (2,3,4) gedrängt wird, wobei das Verformungswerkzeug (10) wenigstens ein Verformungselement (13) aufweist, das in einer achsparallelen Bohrung (15) des Verformungswerkzeuges (10) angeordnet ist.

2. Verfahren nach Anspruch 1,
**dadurch gekennzeichnet, dass**
das Material des rohrförmigen Nockenträgers (1) im Schritt c) derart radial nach außen gedrängt wird, dass dieses Material in eine Vertiefung des Nockens (4) gedrängt wird, welche an der Durchgangsbohrung des Nockens, die zum Aufsetzen des Nockens (4) auf den Nockenträger (1) vorgesehen ist, gebildet ist.

3. Verfahren nach Anspruch 2,
**dadurch gekennzeichnet, dass**
das Material des rohrförmigen Nockenträgers (1) im Schritt c) in eine in der Durchgangsbohrung umlaufend gebildeten Vertiefung gedrängt wird.

4. Verfahren nach einem der vorhergehenden Ansprüche,
**dadurch gekennzeichnet, dass**
das Nockensegment (100) im Schitt b) auf einen zentralen Zapfen (12) des Verformungswerkzeuges (10) aufgesetzt wird.

5. Montagevorrichtung zur dauerhaften Befestigung von wenigstens einem Nocken (2, 3, 4) auf einem rohrförmigen Nockenträger (1) zur Erzeugung eines Nockensegmentes, wobei die Montagevorrichung wenigstens ein Verformungswerkzeug (10) zur Verformen des Nockenträgers (1) derart aufweist, dass der wenigstens eine Nocken (2, 3, 4) gegen Bewegen in Axialrichtung auf dem Nockenträger (1) zumindest formschlüssig oder kraftschlüssig gesichert ist, und das Verformungswerkzeug (10) wenigstens ein Verformungselement (13) aufweist, welches sich ausgehend von einer Stirnfläche (19) des Verformungswerkzeuges (10) in axialer Richtung von dieser Stirnfläche (19) weg erstreckt,
**dadurch gekennzeichnet, dass**
das wenigstens eine Verformungselement (13) in einer achsparallelen Bohrung (15) des Verformungswerkzeugs (10) angeordnet ist.

6. Montagevorrichtung nach Anspruch 5,
**dadurch gekennzeichnet, dass**
das Verformungswerkzeug (10) in Axialrichtung auf die Stirnseite (6) des rohrförmigen Nockenträgers (1) zustellbar ist, um den Nockenträger (1) derart zu verformen, dass Material des rohrförmigen Nockenträgers (1) in Radialrichtung nach außen gegen den aufgesetzten Nocken (2, 3, 4) gedrängt wird.

7. Montagevorrichtung nach einem der Ansprüche 5 bis 6,
**dadurch gekennzeichnet, dass**
das Verformungswerkzeug (10) eine Mehrzahl an Verformungselementen (13) aufweist, welche mit gleichförmigem Winkelabstand in Umfangsrichtung an dem Verformungswerkzeug (10) angeordnet sind.

8. Montagevorrichtung nach einem der Ansprüche 5 bis 7,
**dadurch gekennzeichnet, dass**
das Verformungselement (13) als Messer mit einer Spitze (14) ausgebildet ist.

9. Montagevorrichtung nach Anspruch 8,
**dadurch gekennzeichnet, dass**
die Spitze (14) keilförmig oder kegelförmig ausgebildet ist.

## Claims

1. Method for permanently fastening at least one cam (2, 3, 4) on a tubular cam carrier (1), having at least the following method steps:
a) positioning the at least one cam (2, 3, 4) on the cam carrier (1) in a predefined axial and angular position such that the cam carrier (1) extends at least in sections through a passage bore of the cam (2, 3, 4), wherein an end face (6) of the cam carrier (1) is aligned with an end face (5) of the cam (4),
b) arranging the cam segment (100) formed from the cam carrier (1) and the at least one cam (2, 3, 4) in an assembly device;
c) deforming the cam carrier (1) such that the at least one cam (2, 3, 4) is secured at least in a form-fitting or force-fitting manner against movement in an axial direction on the cam carrier (1), wherein a deformation tool (10) of the assembly device is advanced in an axial direction onto the end face (6) of the cam carrier (1), and the cam carrier (1) is thus deformed, **characterized in that** material of the cam carrier (1) is forced outward in a radial direction against the cam (2, 3, 4) that has been placed on, wherein the deformation tool (10) has at least one deformation element (13) which is arranged in an axially parallel bore (15) of the deformation tool (10).

2. Method according to Claim 1,
**characterized in that**
the material of the tubular cam carrier (1) is, in step c), forced radially outward such that said material is forced into a depression of the cam (4), which depression is formed on the passage bore, provided for the placement of the cam (4) onto the cam carrier (1), of the cam.

3. Method according to Claim 2,
**characterized in that**
the material of the tubular cam carrier (1) is, in step c), forced into a depression formed in an encircling manner in the passage bore.

4. Method according to one of the preceding claims,
**characterized in that**
the cam segment (100) is, in step b), placed onto a central peg (12) of the deformation tool (10).

5. Assembly device for permanently fastening at least one cam (2, 3, 4) on a tubular cam carrier (1) in order to produce a cam segment, wherein the assembly device comprises at least one deformation tool (10) for deforming the cam carrier (1) such that the at least one cam (2, 3, 4) is secured at least in a form-fitting or force-fitting manner against movement in an axial direction on the cam carrier (1), and the deformation tool (10) comprises at least one deformation element (13) which, proceeding from an end face (19) of the deformation tool (10), extends in an axial direction away from said end face (19),
**characterized in that**
the at least one deformation element (13) is arranged in an axially parallel bore (15) of the deformation tool (10).

6. Assembly device according to Claim 5,
**characterized in that**
the deformation tool (10) can be advanced in an axial direction onto the end face (6) of the tubular cam carrier (1) in order to deform the cam carrier (1) such that material of the tubular cam carrier (1) is forced outward in a radial direction against the cam (2, 3, 4) that has been placed on.

7. Assembly device according to one of Claims 5 to 6,
**characterized in that**
the deformation tool (10) comprises a multiplicity of deformation elements (13) which are arranged on the deformation tool (10) at uniform angular intervals in a circumferential direction.

8. Assembly device according to one of Claims 5 to 7,
**characterized in that**
the deformation element (13) is formed as a blade with a tip (14).

9. Assembly device according to Claim 8,
**characterized in that**
the tip (14) is of wedge-shaped or conical form.

## Revendications

1. Procédé de fixation permanente d'au moins une came (2, 3, 4) sur un support de came tubulaire (1), comprenant au moins les étapes de procédé suivantes :
a) positionnement de ladite au moins une came (2, 3, 4) sur le support de came (1) dans une position axiale et angulaire prédéfinie de telle sorte que le support de came (1) s'étende au moins dans certaines zones à travers un alésage traversant de la came (2, 3, 4), un côté frontal (6) du support de came (1) étant aligné avec un côté frontal (5) de la came (4),
b) agencement du segment de came (100) formé à partir du support de came (1) et de ladite au moins une came (2, 3, 4) dans un dispositif de montage ;
c) déformation du support de came (1) de telle sorte que ladite au moins une came (2, 3, 4) soit fixée sur le support de came (1) au moins par complémentarité de forme ou à force de manière à empêcher un déplacement dans la direction axiale, un outil de déformation (10) du dispositif de montage étant avancé dans la direction axiale sur le côté frontal (6) du support de came (1), et le support de came (1) étant ainsi déformé, **caractérisé en ce que** le matériau du support de came (1) est refoulé dans la direction radiale vers l'extérieur contre la came rapportée (2, 3, 4), l'outil de déformation (10) comprenant au moins un élément de déformation (13) qui est disposé dans un alésage (15) axialement parallèle de l'outil de déformation (10).

2. Procédé selon la revendication 1,
**caractérisé en ce que**
le matériau du support de came tubulaire (1) est refoulé radialement vers l'extérieur à l'étape c) de telle sorte que ce matériau soit refoulé dans un évidement de la came (4) qui est formé sur l'alésage traversant de la came qui est prévu pour le placement de la came (4) sur le support de came (1).

3. Procédé selon la revendication 2,
**caractérisé en ce que**
le matériau du support de came tubulaire (1) est refoulé dans un évidement formé de manière périphérique dans l'alésage traversant à l'étape c).

4. Procédé selon l'une des revendications précédentes,
**caractérisé en ce que**
le segment de came (100) est placé sur un tourillon central (12) de l'outil de déformation (10) à l'étape b).

5. Dispositif de montage pour la fixation permanente d'au moins une came (2, 3, 4) sur un support de came tubulaire (1) pour produire un segment de came, le dispositif de montage comprenant au moins un outil de déformation (10) pour la déformation du support de came (1) de telle sorte que ladite au moins une came (2, 3, 4) soit fixée sur le support de came (1) au moins par complémentarité de forme ou à force de manière à empêcher un déplacement dans la direction axiale, et l'outil de déformation (10) comprenant au moins un élément de déformation (13), lequel s'étend à partir d'une surface frontale (19) de l'outil de déformation (10) à l'écart de cette surface frontale (19) dans la direction axiale,
**caractérisé en ce que**
ledit au moins un élément de déformation (13) est disposé dans un alésage (15) axialement parallèle de l'outil de déformation (10).

6. Dispositif de montage selon la revendication 5,
**caractérisé en ce que**
l'outil de déformation (10) peut être avancé dans la direction axiale sur le côté frontal (6) du support de came tubulaire (1) afin de déformer le support de came (1) de telle sorte que le matériau du support de came tubulaire (1) soit refoulé dans la direction radiale vers l'extérieur contre la came rapportée (2, 3, 4).

7. Dispositif de montage selon la revendication 5 ou 6,
**caractérisé en ce que**
l'outil de déformation (10) comprend une pluralité d'éléments de déformation (13), lesquels sont disposés sur l'outil de déformation (10) suivant un écart angulaire régulier dans la direction périphérique.

8. Dispositif de montage selon l'une des revendications 5 à 7,
**caractérisé en ce que**
l'élément de déformation (13) est réalisé sous forme de lame dotée d'une pointe (14).

9. Dispositif de montage selon la revendication 8,
**caractérisé en ce que**
la pointe (14) est cunéiforme ou conique.
